# EUROPÄISCHE PATENTSCHRIFT

(11) **EP 0 645 446 B1**
(45) Veröffentlichungstag und Bekanntmachung des Hinweises auf die Patenterteilung: **20.12.2000**
(21) Anmeldenummer: 94114904.9
(22) Anmeldetag: 22.09.1994
(51) Int. Cl.: C12M 1/12, C12H 1/04, C12H 1/06, A23L 2/82

(54) **Vorrichtung zur Aufnahme von Stabilisierungsmittel für Getränke und andere Flüssigkeiten**
Device for retaining stabilising agents for drinks and other fluids
Dispositif pour recueillir les agents stabilisant des boissons ou d'autres liquides

(30) Priorität: 23.09.1993 DE 4332361
(43) Veröffentlichungstag der Anmeldung: 29.03.1995
(73) Patentinhaber: Seitz-Schenk Filtersystems GmbH, 55543 Bad Kreuznach (DE)
(72) Erfinder: Oechsle, Dietmar, Dr., D-73529 Schwäbisch Gmünd (DE)
(74) Vertreter: Wasmuth, Rolf, Dipl.-Ing.

(56) Entgegenhaltungen:
- CH-A- 615 841
- DE-A- 4 125 594
- US-A- 4 405 562
- US-A- 4 655 919
- US-A- 4 833 083

## Beschreibung

Die Erfindung betrifft eine Vorrichtung zur Aufnahme von körnigem Stabilisierungsmittel entsprechend dem Oberbegriff des Anspruches 1.

Bei der Herstellung von Getränken wie Bier, Wein und Fruchtsaft müssen aus der Flüssigkeit potentielle Trübungsbildner entfernt werden (Stabilisierung). Nach einer Vorfiltration, bei der bereits Trubstoffe ausgefiltert wurden, wird das dabei entstandene Unfiltrat einem Stabilisierungsschritt unterzogen, bevor es zur Endfiltration weitergeleitet wird. Während der Stabilisierung werden potentielle Trübungsbildner, z.B. Polyphenole, aus dem Unfiltrat an einem Stabilisierungsmittel adsorbiert. Als Adsorbens haben sich Polymere, insbesondere quervernetztes Polyvinvlpyrrolidon (PVPP) bewährt, die nach der Adsorption von Polyphenolen durch Spülen gereinigt und mittels Laugen regeneriert werden können, so daß es fast unbegrenzt wiederverwendbar ist. Das PVPP kann zur Erzielung einer geeigneten Kornfraktion nach der Lehre der DE-A1 41 25 594 behandelt werden. Zur Stabilisierung des Unfiltrats kann eine das PVPP enthaltende Suspension verwendet werden, aber auch das körnige PVPP als Trockenmasse.

In der DE-A 41 25 594 ist ein Verfahren zur Behandlung von Flüssigkeiten, insbesondere Getränken beschrieben, mit dem mittels feiner bis feinster organischer bzw. anorganischer Partikel Stabilisierungs- und Filterhilfsmittel mit vorbestimmten verfahrensspezifischen bzw. vorgebbaren physikalischen bzw. chemischen Eigenschaften hergestellt werden können. Bei dem Verfahren werden feine bis feinste organische und/oder anorganische körnige Partikel verwendet, wobei gemäß der Erfindung die Partikel zur Agglomeration in einem ersten Verfahrensschritt gemischt und zusammengepreßt und mindestens bis in die Nähe ihres Schmelzpunktes erhitzt werden. Danach werden die Partikel bei angepaßter Verweilzeit nach Art einer Sinterung fixiert, worauf das entstandene Agglomerat in einer seiner Verwendung entsprechenden Korngröße gesichtet bzw. in einem Mahlaggregat zerkleinert wird. Zur Herstellung von Getränke-Stabilisierungsmitteln vorbestimmter Korngröße und Stabilität werden organische körnige Partikel synthetischen Ursprungs, z.B. PVPP, Kunststoffgranulate und/oder modifizierte Zellulose verwendet. Die Partikel können dabei einer Kompaktierung unterworfen werden.

Eine gattungsgemäße Vorrichtung ist aus dem Prospekt "SEITZ-Modulfiltersystem zur Bierstabilisierung" mit Druckvermerk SFWP 295 5 889 Oe bekannt. Die Vorrichtung besteht aus übereinander angeordneten, zu einem Modul zusammengebauten Scheiben. In dem Stabilisierungsgefäß sind z.B. vier solcher Module übereinander angeordnet. Die Scheiben der Module bestehen aus PVPP-haltigen Filterschichten und gitterförmigen Kunststoff-Trägern für diese Filterschichten, die von der zu stabilisierenden Flüssigkeit durchströmt werden.

Die als Stützkörper für das Stabilisierungsmittel notwendigen Scheiben haben einen beachtlichen Platzbedarf, so daß das Volumen des Stabilisierungsgefäßes für die Adsorption nur unzureichend ausgenutzt werden kann. Auch ist der Vorteil der fast unbegrenzten Regenerierbarkeit des als Stabilisierungsmittel verwendeten PVPP nicht nutzbar, weil die PVPP-haltigen Filterschichten von den Laugen, die für die Regenerierung notwendig sind, angegriffen werden und daher bald durch Verschleiß unbrauchbar werden. Das Modul muß dann insgesamt ausgewechselt und als Abfall entsorgt werden.

Der Erfindung liegt die Aufgabe zugrunde, die Vorrichtung so auszubilden, daß sie bei gleichem Volumen eine größere Menge körnigen Stabilisierungsmittels aufnehmen kann und einfach zu handhaben ist.

Die Aufgabe wird gemäß der Erfindung mit den Merkmalen des Patentanspruches 1 gelöst.

Die erfindungsgemäße Kartusche kann in dem Aufnahmeraum zwischen Anströmwandung und Ablaufwandung lose eingeschüttetes Stabilisierungsmittel aufnehmen, wobei das Volumen des Aufnahmeraumes nicht durch Einbauten beschränkt ist.

Vorteilhaft besteht die Anströmwandung und/oder die Ablaufwandung aus einem Gewebe wie Filtertuch, Vlies, Metall, Sinterwerkstoff oder ähnlichem, das fein genug ist, um das körnige Stabilisierungsmittel zurückzuhalten, aber dennoch den Durchtritt der zu stabilisierenden Flüssigkeit erlaubt. Auf der dem Aufnahmeraum abgewandten Seite kann das Gewebe von einer Edelstahlwandung abgestützt sein, die Löcher für ein staufreies Zu- und Abströmen der Flüssigkeit aufweist.

Gemäß einer weiteren Ausführung ist die Anström- und die Ablaufwandung als selbsttragende, druckstabile, poröse Wand ausgebildet, die vorteilhaft aus einem Sinterwerkstoff wie Keramik, Metall oder Kunststoff gefertigt ist, das zwar den Durchtritt der Flüssigkeit ermöglicht, zugleich aber das Stabilisierungsmittel zurückhält. Auf den Einsatz eines Gewebes kann dann verzichtet werden.

Zweckmäßig ist der Aufnahmeraum ein Ringraum mit einem inneren, axial offenen Hohlraum, durch den vorteilhaft die stabilisierte Flüssigkeit abgeleitet wird. Die innere und die äußere Umfangswand des Ringraums sind durch Gehäusewände der Kartusche gebildet, vorteilhaft zylindrisch ausgebildet und koaxial angeordnet; die axialen Stirnwände des Ringraumes sind durch die Anströmwandung und die Ablaufwandung gebildet, die parallel zueinander liegen. Der so gebildete zylindrische Ringraum für das Stabilisierungsmittel wird stirnseitig von der Flüssigkeit durchströmt. Da der Ringraum keine Einbauten enthält, ist sein Füllvolumen erheblich größer als bei der bekannten Vorrichtung, in der die Stützkörper, also die PVPP-haltigen Filterschichten mit ihren Trägern, viel Platz beanspruchen.

Gemäß einer vorteilhaften Ausführung sind die innere und die äußere Umfangswand des Ringraums von einer flüssigkeitsdichten Folie gebildet, die zusammen mit der Anströmwandung und der Ablaufwandung einen Aufnahmebeutel für das Stabilisierungsmittel bilden. An die Ablaufwandung kann sich auf der dem Ringraum abgewandten Seite ein Ablaufraum anschließen, der sich über die Fläche der Ablaufwandung erstreckt. Der Ablaufraum trennt vorteilhaft axial benachbarte Kartuschen, die etwa spiegelsymmetrisch zu einer senkrecht zur Mittelachse verlaufenden Symmetrieebene angeordnet sind. Der Ablaufraum ist hierbei durch die einander gegenüberliegenden Ablaufwandungen der benachbarten Kartuschen begrenzt und ist insbesondere in einem tellerförmigen, druckstabilen Drainagekörper ausgebildet.

Die Schichtdicke der Schüttung des Stabilisierungsmittels wird von dem Unfiltrat und beim Regeneriervorgang auch von Wasser und Lauge durchströmt. Um einen geringen Strömungswiderstand zu erhalten, ist eine relativ grobe Körnung des Stabilisierungsmittels vorzusehen. Die Korngröße soll zwischen 25 µm und 400 µm betragen. Eine Beimischung von Feinanteilen mit einer Korngröße unterhalb 25 µm, beispielsweise bis zu 1 µm, ist zweckmäßig; der Masseanteil dieser feinkörnigen Bestandteile beträgt vorteilhaft nicht mehr als etwa 8 %.

Die erfindungsgemäße Vorrichtung hat den weiteren Vorteil, daß bei Verwendung von regenerierbarem Stabilisierungsmittel, insbesondere von PVPP, die Wiederholung der Regenerierung nur von der Regenerierbarkeit des Stabilisierungsmittels selbst abhängig ist, das der Kartusche zu diesem Zweck über eine abnehmbare Wandung, insbesondere die Anströmwandung, entnommen werden kann. Die abnehmbare Wandung erlaubt zudem ein einfaches Füllen der Kartusche, so zum Beispiel, wenn durch den Stabilisierungsprozeß infolge mechanischer Reibung das Füllvolumen abgenommen hat.

Das Stabilisierungsmittel kann auch in der Kartusche selbst behandelt werden, die in diesem Fall zum Spülen mit Wasser und anschließend für die Regenerierung des Stabilisierungsmittels mit Lauge angeströmt wird.

Weitere Merkmale der Erfindung sowie vorteilhafte Ausgestaltungen ergeben sich aus den weiteren Ansprüchen, der Beschreibung und den Zeichnungen, in denen Ausführungsbeispiele der Erfindung dargestellt sind. Es zeigen:
- Fig. 1: einen Schnitt durch eine erfindungsgemäße Kartusche,
- Fig. 2: eine Draufsicht auf die geschlossene Kartusche nach Fig. 1,
- Fig. 3: einen Teilschnitt eines zwischen flüssigkeitsdurchlässiger Wandung und angrenzender Wand einklemmbaren Gewebes,
- Fig. 4: einen schematischen Axialschnitt durch einen stationären Filterbehälter mit eingesetzten Kartuschen,
- Fig. 5: einen schematischen Axialschnitt durch einen Filterbehälter mit eingesetzten Kartuschen und einer anderen Strömungsführung,
- Fig. 6: einen schematischen Axialschnitt durch einen Behälter mit Kartusche einer anderen Ausführungsform,
- Fig. 7: einen Schnitt durch eine kegelstumpfförmige Kartusche,
- Fig. 8: einen Schnitt durch zwei spiegelsymmetrisch zueinander angeordnete Kartuschen.

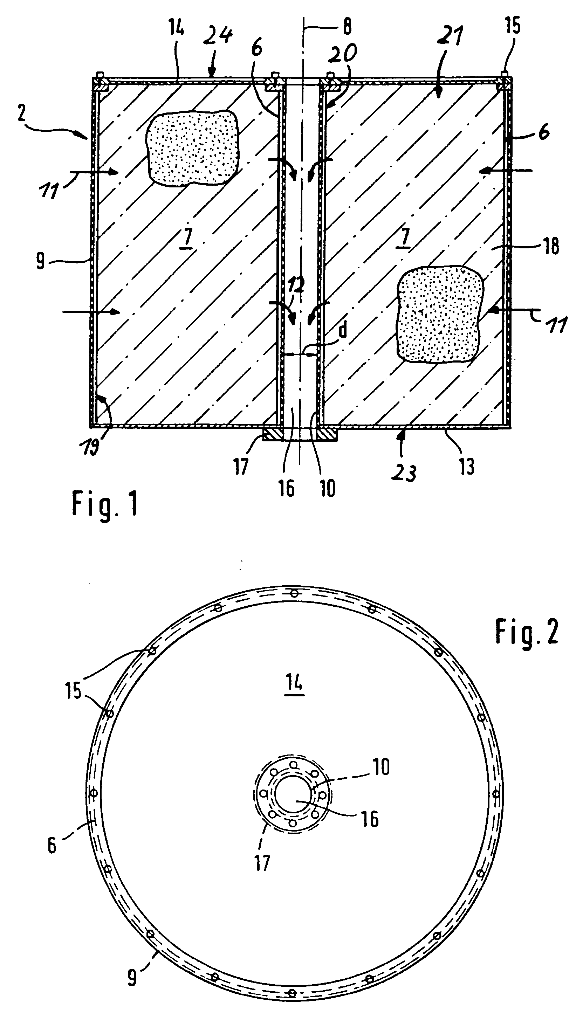

Die in den Fig. 1 und 2 gezeigte Kartusche 2 ist ringzylindrisch ausgebildet. Der einen Aufnahmeraum 21 bildende Ringraum 18 ist mit einem Stabilisierungsmittel 7, insbesondere mit Polyvinylpyrrolidon (PVPP) befüllt. Die inneren und die äußeren Umfangswände des Ringraums 18 bilden flüssigkeitsdurchlässige Wandungen 19, 20, wobei in der eingezeichneten Strömungsrichtung gemäß der Pfeile 11, 12 eine radial äußere Anströmwandung 19 und eine dazu mit Abstand parallel, d.h. konzentrisch angeordnete innere Ablaufwandung 20 ausgebildet ist. Die Stirnwände 23, 24 des Ringraumes 18 sind von Gehäusewänden 13, 14 der Kartusche 2 gebildet, wobei die Stirnwand 23 einen Boden 13 der Kartusche 2 und die Stirnwand 24 einen lösbaren, den Ringraum 18 axial verschließenden Deckel 14 bildet. Die Anströmwandung 19 und die Ablaufwandung 20 können aus einem flexiblen, flüssigkeitsdurchlässigen Gewebe 6 bestehen, welches bevorzugt an einer stützenden Gehäusewand 9, 10 anliegt. Das Gewebe 6 ist bevorzugt ein Filtertuch aus laugebeständigem Material, vorzugsweise Polyethylen. Es können auch andere Materialien wie Vliese, Metallgewebe, gesinterte Gewebe oder dgl. zweckmäßig sein. Das Gewebe 6 muß einerseits für die zu stabilisierende Flüssigkeit durchlässig sein, andererseits aber das in den Ringraum 18 eingefüllte PVPP zumindest weitgehend zurückhalten.

Durch die konzentrische Anordnung von Anströmwandung 19 und Ablaufwandung 20 ist gewährleistet, daß die zu stabilisierende Flüssigkeit den Ringraum 18 gleichmäßig in Radialrichtung durchströmt, ohne daß Strömungsstauräume entstehen, so daß das PVPP gleichmäßig genutzt wird. Die Anströmwandung 19 und die Ablaufwandung 20 sind axialsymmetrisch, insbesondere rotationssymmetrisch zur Mittelachse 8 der Kartusche 2 angeordnet, so daß jeder radiale Strömungsweg in der Kartusche etwa gleich ist. Die das Gewebe 6 stützenden Gehäusewände 9, 10 sind bevorzugt auf der dem Aufnahmeraum 21 abgewandten Seite angeordnet und bilden ferner die Kartusche in Axialrichtung druckstabil versteifende Stützkörper. Sie bilden zugleich die radial äußere Gehäusewand bzw. die radial innere Gehäusewand der Kartusche 2. Der Stützkörper besteht vorzugsweise aus einem gelochten Edelstahlblech, wobei die Löcher einen Durchmesser von bis zu mehreren Millimetern haben können, um eine staufreie Durchströmung der Kartusche 2 zu gewährleisten.

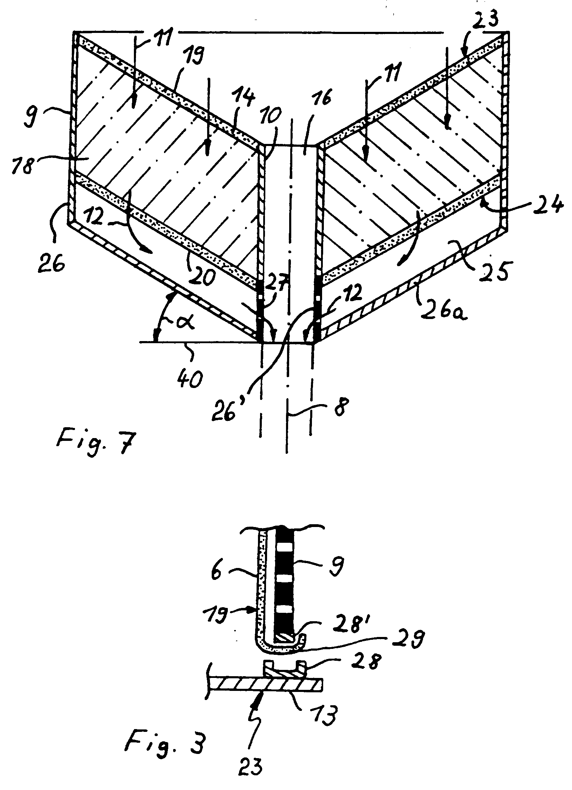

Gemäß Fig. 3 kann der stirnseitige Rand 29 des Gewebes 6 zwischen dem die Gehäusewand 9 bildenden perforierten Stützkörper und der angrenzenden, den Boden 13 bildenden Stirnwand 23 festgeklemmt werden, wobei für eine flüssigkeitsdichte Anlage zwischen der Gehäusewand 9 und dem Boden 13 Dichtungen 28, 28' eingesetzt werden können. In gleicher Weise kann der gegenüberliegende stirnseitige Rand des Gewebes zwischen Gehäusewand 9 und Deckel 14 der Kartusche 2 eingeklemmt werden; entsprechend wird das die Ablaufwandung 20 bildende Gewebe 6 zwischen der inneren Gehäusewand 10 und dem Boden 13 bzw. dem Deckel 14 festgeklemmt.

Gemäß einer nicht gezeigten Ausführung kann auf die druckstabile Gehäusewand 9 auch verzichtet werden; auf die Kartusche in Axialrichtung wirkende Druckkräfte werden in diesem Fall von der inneren Gehäusewand 10 aufgenommen. Das radial außen liegende Gewebe 6 kann über geeignete Befestigungsmittel wie z.B. Schellenverbindungen an Boden 13 und Deckel 14 der Kartusche 2 fixiert werden.

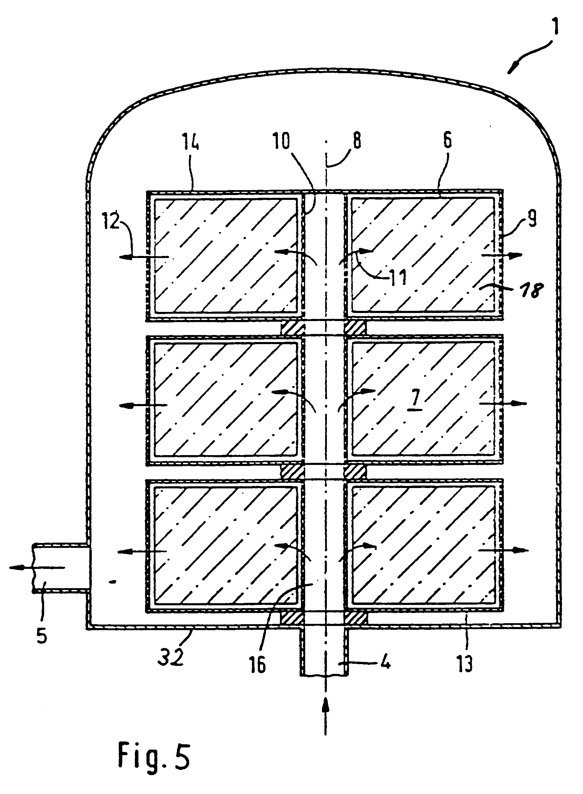

Die innere Gehäusewand 10 begrenzt einen zentralen Hohlraum 16, der die Kartusche 2 axial durchsetzt, stirnseitig offen ist und koaxial zu einer Mittelachse 8 liegt. Im Ausführungsbeispiel nach Fig. 1 ist die Kartusche 2 radial von außen nach innen von der zu stabilisierenden Flüssigkeit in Pfeilrichtung 11 durchströmt, wobei die stabilisierte Flüssigkeit in Pfeilrichtung 12 durch den inneren Hohlraum 16 aus der Kartusche 2 abgeleitet wird. Die Flüssigkeit durchströmt die Kartusche dem Druckabfall von ca. 0,3 bis 1 bar folgend, der zwischen dem die Kartusche umgebenden Außenbereich und dem inneren Hohlraum 16 besteht. Über eine Umkehr der Druckverhältnisse kann die Durchströmung des Ringraumes 18 gemäß Fig. 5 auch radial von innen nach außen verlaufend erfolgen, wobei die Flüssigkeit durch den inneren Hohlraum 16 der Kartusche zugeführt und radial nach außen in Pfeilrichtung 11, 12 abgeleitet wird.

Das in den Ringraum 18 eingefüllte, schüttfähige PVPP soll verhältnismäßig grobkörnig mit sehr geringem Feinkornanteil sein, um eine hohe Permeabilität zu gewährleisten; die von dem Unfiltrat zu durchströmende Dicke der Stabilisierungsschicht liegt zwischen 50 und 1000 mm, vorzugsweise bei 40 bis 60 mm. Die Korngröße des PVPP liegt zwischen ca. 25 µm und ca. 400 µm, wobei ein geringer Masseanteil von bis zu 8% an feinkörnigem PVPP zweckmäßig ist, dessen Korngröße beispielsweise zwischen 1 µm und 25 µm beträgt. Es kann bei einem solchen überwiegend grobkörnigen Adsorbens, das eine offene Struktur hat, ein mechanischer Verschleiß durch Reibung auftreten. Solche zerriebenen Partikel können während des Stabilisierungsvorganges und auch bei der Reinigung und Regenerierung ausgeschwemmt werden. Dieser Verlust kann sehr einfach durch Nachfüllen von gekörntem PVPP ausgeglichen werden, wofür der abnehmbare Deckel 14, der über Schraubverbindungen 15 an der Außenwand 9 und der Innenwand 10 befestigt sein kann, von der Kartusche gelöst wird. Zum Füllen des Ringraums hat sich vorgequelltes PVPP als zweckmäßig erwiesen. Vor dem Verschließen des Ringraumes werden vorteilhaft noch trockene PVPP-Partikel aufgestreut; im Verhältnis zum Gesamtvolumen werden etwa 2 % trockenes Material eingebracht.

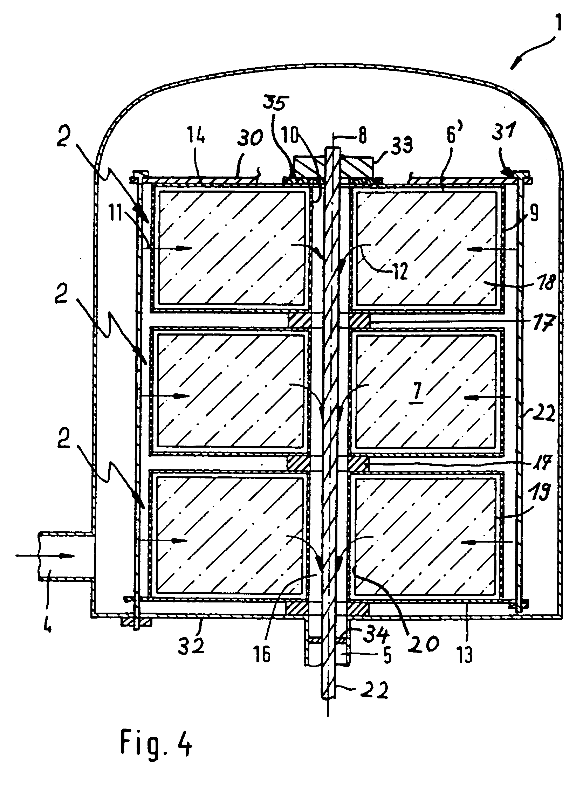

Gemäß Fig. 4 sind die Kartuschen in einem stationären Behälter 1 aufeinandergestapelt, derart, daß die inneren, zylindrischen Hohlräume 16 ein durchgehendes Innenrohr bilden, wobei die Mittelachsen 8 der Hohlräume 16 etwa eine gemeinsame Rohrachse bilden. Zwischen zwei benachbarten Kartuschen 2 sind zweckmäßig Abstandshalter 17 angeordnet, die auf einer Stirnwand 23 festliegen und vorteilhaft als die Stirnseiten des Hohlraums 16 umgebende Dichtringe ausgebildet sind. Diese haben einen Innendurchmesser, der etwa dem Innendurchmesser d des Hohlraums 16 entspricht, so daß die Hohlräume 16 benachbarter Kartuschen flüssigkeitsdicht aneinanderschließen. Zweckmäßig sind die aufeinandergestapelten Kartuschen von einer Spannvorrichtung axial kraftbeaufschlagt. Eine derartige Spannvorrichtung kann gemäß Fig. 4 aus äußeren oder inneren Zugankern 22 bestehen, die achsparallel zur Mittelachse 8 verlaufen. Die Zuganker 22 können über den Umfang der Kartuschen verteilt angeordnet sein. Hierfür ist eine auf der obersten Kartusche aufliegende Druckplatte 30 mit größerem Durchmesser als der Kartuschenaußendurchmesser vorgesehen, in deren radial überstehenden Bereich Bohrungen 31 zur Aufnahme der Zuganker 22 angeordnet sind. Die Zuganker 22 können an ihrem axial gegenüberliegenden Ende, wie in Fig. 4 links dargestellt ist, am Boden 32 des stationären Behälters befestigt sein. Auch kann ein die Hohlräume 16 durchragender zentraler Zuganker 22 vorgesehen sein, der mit einer Spannmutter 33 über eine Dichtung 35 auf der obersten Kartusche abdichtend aufliegt, wobei die Spannmutter 33 einen größeren Durchmesser aufweist als der Innendurchmesser d der Hohlräume 16. Im Bereich der Abflußleitung 5, die an die Hohlräume 16 anschließt, ist der Zuganker 22 durch radiale Haltestreben 34 verankert, so daß über den Zuganker 22 eine Spannkraft aufgebracht werden kann, durch die die aufeinandergestapelten Kartuschen flüssigkeitsdicht verspannt werden.

Über eine Zufuhrleitung 4 wird das zu stabilisierende Unfiltrat, das zuvor zweckmäßig einer Vorfiltration unterzogen wurde, dem Behälter 1 zugeführt. Aufgrund eines aufgebrachten Betriebsdrucks im Behälter von etwa 2 bis 2,5 bar strömt das Unfiltrat über die Anströmwandung 19 in den Ringraum 18 mit dem darin eingefüllten PVPP ein, so daß eine Stabilisierung durch Adsorption von potentiellen Trübungsbildnern, wie z.B. Polyphenolen, stattfindet. Über die innere Ablaufwandung 20 tritt die Flüssigkeit aus dem Ringraum 18 in den Hohlraum 16 aus und fließt über die Abflußleitung 5 aus dem Behälter 1 ab, um anschließend einer Nachfiltration unterzogen zu werden.

In Fig. 5 ist bei gleichem Aufbau der Kartuschen 2 die Strömungsrichtung von radial innen nach radial außen vorgesehen. Die Zufuhrleitung 4 ist im Boden 32 des stationären Behälters 1 ausgebildet und mündet axial in die zentralen Hohlräume 16 der übereinandergestapelten Kartuschen 2. Das Unfiltrat durchströmt in Pfeilrichtung 11, 12 den Ringraum 18 und fließt über die Abflußleitung 5 des Behälters 1 ab. Den Ausführungsformen der Kartuschen in Fig. 4 und 5 ist gemeinsam, daß der Boden 13 und der Deckel 14 jeder Kartusche 2 flüssigkeitsdicht ausgebildet ist, so daß sich eine radiale Strömung ausbildet; axiale Strömungen treten weitgehend nicht auf.

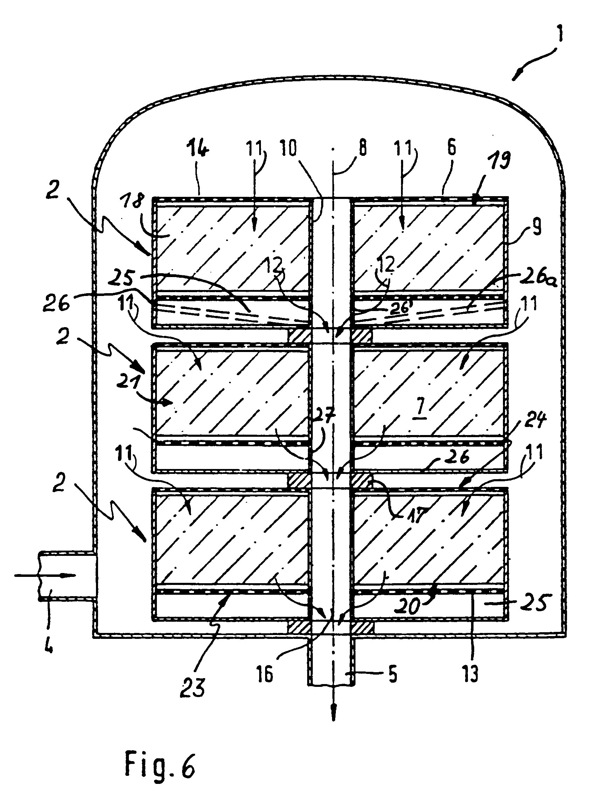

Die in Fig. 6 gezeigten gestapelten Kartuschen sind zylindrisch mit einem zentralen Hohlraum 16 ausgebildet, wobei die Hohlräume 16 axial aneinanderschließen. Die innere und die äußere Umfangswand des Ringraumes 18 ist durch flüssigkeitsdichte, zylindrische Gehäusewände 9, 10 der Kartusche 2 gebildet; die axialen Stirnwände 23, 24 hingegen sind als Anströmwandung 19 und Ablaufwandung 20 ausgebildet, weshalb die Kartusche 2 axial in Richtung der Pfeile 11, 12 durchströmt ist. Die bevorzugt jeweils oben liegende axiale Stirnwand 19 jeder Kartusche ist zweckmäßig als lösbarer Deckel 14 ausgebildet. Die Anströmwandung 19 und die Ablaufwandung 20 können in gleicher Weise ausgebildet sein wie bei der vorstehend beschriebenen Kartusche der Fig. 1 bis 5. Nach Durchströmen des Stabilisierungsmittels im Ringraum 18 tritt die Flüssigkeit axial in einen nachgeschalteten Ablaufraum 25 ein, der axial von dem Boden 13 der Kartusche 2 begrenzt ist. Die Raumwände 26, 26' schließen bevorzugt axial an die Gehäusewände 9, 10 an; ein der Ablaufwandung 20 gegenüberliegender Boden 26a schließt den Ablaufraum ab. Die Wandungen des Ablaufraumes 25 sind zweckmäßig einteilig mit den Gehäusewänden der Kartusche ausgebildet. Der Ablaufraum 25 weist einen inneren radialen Ablauf 27 auf, der aus einer perforierten Wandung bestehen kann und jeweils in den zentralen Hohlraum 16 mündet.

Um einen Flüssigkeitsstau im Ablaufraum 25 zu vermeiden, kann - wie in Fig. 6 strichliert eingezeichnet - dessen Boden 26a in Richtung der Mittelachse 8 radial abfallend geneigt sein. Die durch die Ablaufwandung 20 in den Ablaufraum 25 strömende Flüssigkeit wird infolge des radialen Gefälles nach innen zum inneren Ablauf 27 und in den inneren Hohlraum 16 abströmen.

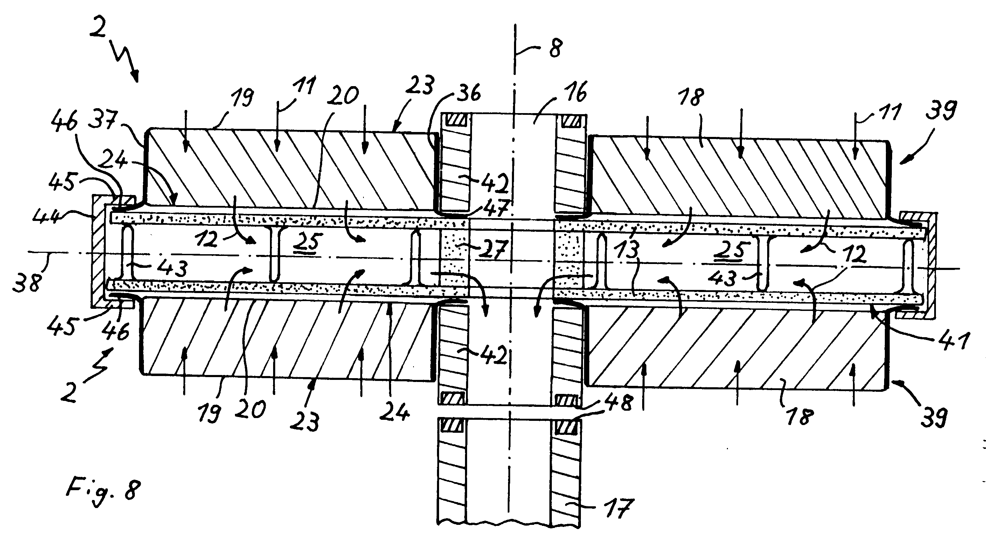

Die in Fig. 7 gezeigte Kartusche entspricht im Aufbau der axial durchströmten Kartusche nach Fig. 6. Die Ablaufwandung 20, bevorzugt auch die Anströmwandung 19, liegt etwa parallel zu dem radial zur Mittelachse 8 abfallenden Boden 26a des Ablaufraums 25, wobei der Neigungswinkel α - gemessen zwischen einer Lotrechten 40 zur Mittelachse 8 und der Dichtwand 26 - vorzugsweise maximal etwa 30° beträgt. Die Kartusche 2 weist daher eine kegelstumpfförmige Gestalt auf.

Im Ausführungsbeispiel nach Fig. 7 ist die Anströmwandung 19 und die Ablaufwandung 20 als druckstabile, poröse Wandung ausgebildet, die ein Durchströmen des Unfiltrats erlaubt, zugleich aber das Stabilisierungsmittel zurückhält. Die Anström- bzw. die Ablaufwandung kann aus gesintertem Metall, Kunststoff, gesinterter Keramik oder dgl. bestehen. Bei Verwendung einer druckstabilen, porösen Wandung kann die Anordnung eines Gewebes entfallen.

Ein weiteres Ausführungsbeispiel ist in Figur 8 dargestellt, die einen Schnitt durch zwei spiegelsymmetrisch zueinander angeordnete Kartuschen zeigt. Der Ringraum 18 jeder Kartusche 2 ist radial von einer inneren und äußeren Umfangswand begrenzt, die zweckmäßig jeweils aus einer flüssigkeitsdichten Folie 36, 37 gebildet sind. Der Ringraum 18 ist axial von der Anströmwandung 19 und der Ablaufwandung 20 begrenzt. Die Anströmwandung und die Ablaufwandung, die zweckmäßig aus flüssigkeitsdurchlässigem Gewebe aufgebaut sind, bilden zusammen mit den radialen, flüssigkeitsdichten Folien 36, 37 einen schlauchförmigen Aufnahmebeutel 39, der um einen zentralen, koaxial zur Mittelachse 8 angeordneten Ablaufstutzen 42 gelegt ist. Bezüglich einer Symmetrieebene 38, die senkrecht zur Mittelachse 8 auf der dem Ringraum 18 abgewandten Seite der Ablaufwandung 20 verläuft, ist etwa spiegelsymmetrisch eine weitere, axial benachbarte Kartusche angeordnet, wobei zwischen den benachbarten Kartuschen ein Ablaufraum 25 ausgebildet ist. Der Ablaufraum 25 weist einen in den inneren Hohlraum 16 mündenden Ablauf 27 auf, der als flüssigkeitsdurchlässige, poröse oder gelochte Wandung ausgebildet sein kann und durch den die stabilisierte Flüssigkeit abfließt.

Der axial von den Ablaufwandungen 20 begrenzte Ablaufraum 25 ist zweckmäßig in einem tellerförmigen, druckstabilen Drainagekörper 41 ausgebildet, der auf beiden axialen Stirnseiten jeweils eine Kartusche 2 trägt. Die Stirnwände des Drainagekörpers 41 sind von flüssigkeitsdurchlässigen Gehäusewänden 13 gebildet, die zugleich die Ablaufwandungen 20 jeder Kartusche stützen und auf der dem Ringraum 18 abgewandten Seite jeder Ablaufwandung liegen.

Der Drainagekörper 41 ist an seinem Außenumfang durch einen umlaufenden Dicht- und Spannring 44 verschlossen, der die benachbarten Gehäusewände 13 gegeneinanderdrückt, wobei Stützelemente 43 die Gehäusewände 13 vorzugsweise etwa parallel und axial auf Abstand zueinander halten. Durch den Dicht- und Spannring 44 ist der Ablaufraum 25 radial nach außen flüssigkeitsdicht verschlossen. Der U-förmige Spannring 44 weist seitliche Schenkel 45 auf, die die Gehäusewände 13 übergreifen und die einen abstehenden Kragen 46, der vorteilhaft einteilig mit der die äußere Umfangswand bildenden Folie 37 ausgebildet ist und radial nach außen absteht, flüssigkeitsdicht an der Gehäusewand 13 festklemmt. In gleicher Weise ist an der die innere Umfangswand bildenden Folie 36 ein winklig abstehender, sich radial nach innen erstreckender Kragen 47 vorgesehen, der zwischen der Gehäusewand 13 und dem Ablaufstutzen 42 dicht festgeklemmt ist. Durch das flüssigkeitsdichte Festklemmen der radial außen und innen liegenden Kragen 46 und 47 sind unerwünschte Strömungsbypässe vermieden; die Flüssigkeit durchströmt axial die Anströmwandung 19 in Pfeilrichtung 11 und tritt über die Ablaufwandung 20 und die Gehäusewand 13 in den Ablaufraum 25 ein (Pfeilrichtung 12), um anschließend über den Ablauf 27 im Ablaufraum 25 dem inneren Hohlraum 16 zugeführt zu werden, der im Ablaufstutzen 42 ausgebildet ist.

Um mehrere, spiegelsymmetrische Kartuschen axial übereinanderstapeln zu können, kann sich an den Ablaufstutzen 42 ein Abstandshalter 17 anschließen, der etwa die gleiche Querschnittsgestalt wie der Ablaufstutzen 42 aufweist. An der freien Stirnseite des Abstandshalters 17 schließen weitere Doppel-Kartuschen an (nicht dargestellt), wobei die Anzahl übereinandergestapelter Kartuschen von der gewünschten Stabilisierungsleistung abhängt. In die Stirnwände von Ablaufstutzen 42 und/oder Abstandshalter 17 können Dichtringe 48 eingesetzt sein, die eine flüssigkeitsdichte Anlage von Ablaufstutzen und Abstandshalter sicherstellen; der Abstandshalter selbst kann auch als Dichtung ausgebildet sein.

Die ringzylindrischen Kartuschen haben zweckmäßig einen Außendurchmesser von etwa 50 mm bis 600 mm, einen Durchmesser d des inneren Hohlraums von etwa 5 mm bis 500 mm und eine Höhe von etwa 40 mm bis 1000 mm, bevorzugt etwa 40 bis 60 mm. Bei gleichem Einbauvolumen kann mit der erfindungsgemäßen Vorrichtung mehr als doppelt so viel PVPP in einem Behälter 1 untergebracht werden als bei Verwendung der einleitend beschriebenen, zu Modulen zusammengefaßten Stabilisierungsscheiben. Die Dimensionierung kann außerdem so ausgelegt werden, daß bestehende Anlagen ohne Umbauten mit der erfindungsgemäßen Kartusche ausgerüstet werden können.

Um die für die Durchströmung des Stabilisierungsmittels benötigte Druckdifferenz zwischen Anströmseite und Ablaufseite möglichst gering zu halten, kann es angezeigt sein, die Dicke des in den Ringraum eingefüllten PVPPs - gemessen in Strömungsrichtung - relativ gering zu halten. Es empfiehlt sich beispielsweise bei einer vorgegebenen Druckdifferenz von 0,5 bar bei axial durchströmten Kartuschen eine Schüttungshöhe von etwa 30 bis 40 mm festzulegen, wodurch eine etwa tellerförmige bzw. scheibenförmige Ausbildung der Kartusche mit einer Höhe von 40 bis 60 mm erzielt ist. Bei radial durchströmten Kartuschen ist das Verhältnis von Außendurchmesser zu Innendurchmesser des Ringraums entsprechend auszulegen.

Die Kartuschen bestehen aus einem Werkstoff, der gegen die zum Regenerieren verwendeten aggressiven Laugen resistent ist. Hierfür kann neben Edelstahl auch Kunststoff wie beispielsweise Polypropylen verwendet werden. Geeignet sind auch Keramikwerkstoffe, die insbesondere bei der Verwendung gesinterter Anström- und Ablaufwandungen zum Einsatz kommen. Durch die verwendeten laugebeständigen Werkstoffe beschränkt sich die Instandhaltung der Vorrichtung weitgehend auf das Nachfüllen von PVPP als Ersatz für ausgeschwemmte Partikel, was besonders kostengünstig ist. Zudem muß das PVPP nur in größeren Zeitabständen regeneriert werden bzw. es kann pro Zeiteinheit mehr Flüssigkeit stabilisiert werden, da der Behälter eine relativ große Menge an PVPP aufnehmen kann. Die Anlage kann dadurch intensiver für ihren eigentlichen Zweck, die Stabilisierung, genutzt werden und muß nur selten für Wartungs- und Instandhaltungsarbeiten außer Betrieb gesetzt werden.

Als Regenerierungsmittel kann beispielsweise Polyvinylimidazol (PVI) verwendet werden.

Um Stauräume und Bypässe im Ringraum zu vermeiden, kann es angezeigt sein, zumindest eine der den Ringraum begrenzenden Wandungen aus einem elastischen Material zu fertigen, welches eine zumindest geringfügige Durchbiegung der entsprechenden Wandung erlaubt. Bei Verwendung einer elastischen Wandung kann teilweise trockenes Stabilisierungsmittel in den Ringraum eingefüllt werden, das während des Stabilisierungsbetriebs aufquillt und dadurch die den Ringraum begrenzenden Wandbereiche unter Spannung setzt. Hierdurch ist sichergestellt, daß der gesamte Ringraum vollständig mit Stabilisierungsmittel ausgefüllt ist, so daß Bypässe sicher vermieden sind.

Anstelle eines die Anströmwandung und die Ablaufwandung bedeckenden Gewebes kann in den Ringraum 18 auch ein Filtertuchsack 6' eingesetzt werden, der schlauchförmig um den zentrischen Hohlraum 16 gelegt ist, siehe Fig. 4 und 5. Zum Nachfüllen von ausgeschwemmtem PVPP kann der gesamte Filtertuchsack in einfacher Weise aus dem Ringraum herausgenommen bzw. wieder eingesetzt werden.

## Patentansprüche

1. Vorrichtung zur Aufnahme von körnigem Stabilisierungsmittel für die Stabilisierung von Getränken und anderen Flüssigkeiten durch Adsorption von potentiellen Trübungsbildern,
dadurch gekennzeichnet, daß die Vorrichtung als Kartusche (2) ausgebildet ist, die eine flüssigkeitsdurchlässige Anströmwandung (19) und eine flüssigkeitsdurchlässige Ablaufwandung (20) aufweist, welche zusammen mit einer angrenzenden, die Kartusche (2) begrenzenden Gehäusewand (9, 10; 13, 14) einen mit dem Stabilisierungsmittel (7) befüllbaren Aufnahmeraum (18, 21) begrenzen.

2. Vorrichtung nach Anspruch 1,
dadurch gekennzeichnet, daß zumindest eine der flüssigkeitsdurchlässigen Wandungen (19, 20) aus einem Gewebe (6) besteht, das auf seiner dem Aufnahmeraum (18, 21) abgewandten Seite von einem die Gehäusewand (9, 10; 13, 14) bildenden Stützkörper getragen ist.

3. Vorrichtung nach Anspruch 1,
dadurch gekennzeichnet, daß zumindest eine der flüssigkeitsdurchlässigen Wandungen (19, 20) aus einem druckstabilen, porösen Material besteht.

4. Vorrichtung nach einem der Ansprüche 1 bis 3,
dadurch gekennzeichnet, daß die Anströmwandung (19) und die Ablaufwandung (20) in parallelem Abstand zueinander angeordnet sind mit den Kartuschenwänden (9, 10; 13, 14) verbunden sind.

5. Vorrichtung nach einem der Ansprüche 1 bis 4,
dadurch gekennzeichnet, daß die Kartusche (2) zu einer Mittelachse (8) axialsymmetrisch ausgebildet ist.

6. Vorrichtung nach einem der Ansprüche 1 bis 5,
dadurch gekennzeichnet, daß der Aufnahmeraum (18, 21) der Kartusche (2) ringförmig mit einem inneren, die Kartusche (2) durchsetzenden zylindrischen Hohlraum (16) ausgebildet ist, wobei eine axiale Stirnwand (23, 24) als lösbarer Deckel (14) ausgebildet ist und im Hohlraum (16) eine die Kartusche (2) haltende Stange (22) einsetzbar ist.

7. Vorrichtung nach Anspruch 6,
dadurch gekennzeichnet, daß die axialen Stirnwände (23, 24) des Ringraumes (18) von der Anströmwandung (19) und der Ablaufwandung (20) gebildet sind, wobei über die Ablaufwandung (20) abströmende Flüssigkeit über den inneren Hohlraum (16) abgeführt ist.

8. Vorrichtung nach Anspruch 7,
dadurch gekennzeichnet, daß die innere und die äußere Umfangswand des Ringraumes (18) durch druckstabile, flüssigkeitsdichte, zylindrische Gehäusewände (9, 10) der Kartusche (2) gebildet sind.

9. Vorrichtung nach Anspruch 7,
dadurch gekennzeichnet, daß die innere und die äußere Umfangswand des Ringraumes (18) von einer flüssigkeitsdichten Folie (36, 37) gebildet ist, die zusammen mit der Anströmwandung (19) und der Ablaufwandung (20) einen Aufnahmebeutel (39) bildet.

10. Vorrichtung nach einem der Ansprüche 6 bis 9,
dadurch gekennzeichnet, daß der Außendurchmesser der Kartusche (2) etwa 50 mm bis 600 mm, der Durchmesser des inneren Hohlraums (16) etwa 5 mm bis 500 mm und die axiale Höhe etwa 40 mm bis 1000 mm beträgt.

11. Vorrichtung nach einem der Ansprüche 1 bis 10,
dadurch gekennzeichnet, daß die Ablaufwandung (20) auf ihrer dem Aufnahmeraum (18) abgewandten Seite einen Ablaufraum (25) begrenzt, der sich über die Fläche der Ablaufwandung (20) erstreckt und einen in den inneren Hohlraum (16) mündenden Ablauf (27) aufweist.

12. Vorrichtung nach Anspruch 11,
dadurch gekennzeichnet, daß die Raumwände (26, 26') des Ablaufraumes (25) in einer Mantelfläche mit der Gehäusewand (9, 10) der Kartusche (2) ausgebildet sind.

13. Vorrichtung nach Anspruch 11,
dadurch gekennzeichnet, daß der Ablaufraum (25) axial benachbarte Kartuschen (2) trennt, die mindestens annähernd spiegelsymmetrisch zu einer senkrecht zur Mittelachse (8) verlaufenden Symmetrieebene (38) angeordnet sind und der Ablaufraum (25) durch die einander gegenüberliegenden Ablaufwandungen (20) der Kartusche (2) begrenzt ist.

14. Vorrichtung nach Anspruch 13,
dadurch gekennzeichnet, daß der Ablaufraum (25) in einem tellerförmigen, druckstabilen Drainagekörper (41) ausgebildet ist, der auf beiden axialen Stirnseiten je eine Kartusche (2) trägt.

15. Vorrichtung nach einem der Ansprüche 1 bis 14,
dadurch gekennzeichnet, daß die Kartusche (2) axial stapelbar ist, wobei auf einer Stirnwand (23, 24) der Kartusche (2) ein Abstandshalter (17) angeordnet ist.

16. Vorrichtung nach einem der Ansprüche 1 bis 15,
dadurch gekennzeichnet, daß das Stabilisierungsmittel (7) eine Korngröße von etwa 25 µm bis 400 µm aufweist, dem vorzugsweise ein Feinkornanteil in Höhe von bis zu etwa 8% Masseanteil beigemischt ist, wobei die Korngröße des Feinkornanteils zwischen etwa 1 µm und 25 µm liegt.

## Claims

1. A device for receiving granular stabilising agents for the stabilisation of drinks and other liquids by adsorption of potential cloudiness formers,
**characterised in that** the device is designed as a cartridge (2) which features a liquid-permeable in-flow wall (19) and a liquid-permeable out-flow wall (20) which, together with a contiguous housing wall (9, 10; 13, 14) which delimits the cartridge, delimit a receiving chamber (18, 21) which can be filled with the stabilising agent (7).

2. A device in accordance with Claim 1,
**characterised in that** at least one of the liquid-permeable walls (19, 20) consists of a woven fabric (6), the side of which facing away from the receiving chamber (18, 21) is borne by a supporting body which forms the housing wall (9, 10; 13, 14).

3. A device in accordance with Claim 1,
**characterised in that** at least one of the liquid-permeable walls (19, 20) consists of a pressure-stable, porous material.

4. A device in accordance with one of Claims 1 to 3,
**characterised in that** the in-flow wall (19) and the out-flow wall (20) are arranged in parallel at a from each other and are connected to the cartridge walls (9, 10; 13, 14).

5. A device in accordance with one of Claims 1 to 4,
**characterised in that** the cartridge (2) is designed to be axially symmetrical to a central axis (8).

6. A device in accordance with one of Claims 1 to 5,
**characterised in that** the receiving chamber (18, 21) of the cartridge (2) is annular in shape with an inner cylindrical cavity (16) which passes through the cartridge (2), whereby an axial front wall (23, 24) is designed as a removable lid (14) and it is possible to insert a rod (22) which holds the cartridge (2) in the cavity (16).

7. A device in accordance with Claim 6,
**characterised in that** the axial front walls (23, 24) of the annular chamber (18) are formed by the in-flow wall (19) and the out-flow wall (20), whereby out-flowing liquid is discharged via the inner cavity (16) through the out-flow wall (20).

8. A device in accordance with Claim 7,
**characterised in that** the inner and the outer peripheral wall of the annular chamber (18) is formed by pressure-stable, liquid-proof cylindrical housing walls (9, 10) of the cartridge (2).

9. A device in accordance with Claim 7,
**characterised in that** the inner and the outer peripheral walls of the annular chamber (18) are formed by a liquid-proof film (36, 37) which, together with the in-flow wall (19) and the out-flow wall (20), form a receiving bag (39).

10. A device in accordance with one of Claims 6 to 9,
**characterised in that** the external diameter of the cartridge (2) is approximately 50 mm to 600 mm, the diameter of the inner cavity (16) is approximately 5 mm to 500 mm and the axial height is approximately 40 mm to 1000 mm.

11. A device in accordance with one of Claims 1 to 10,
**characterised in that** the side of the out-flow wall (20) facing away from the receiving chamber (18) delimits a discharge chamber (25) which extends along the surface of the out-flow wall (20) and has an outlet (27) which discharges into the inner cavity (16).

12. A device in accordance with Claim 11,
**characterised in that** the chamber walls (26, 26') of the discharge chamber (25) are designed in the form of an outer surface with the housing wall (9, 10) of the cartridge (2).

13. A device in accordance with Claim 11,
**characterised in that** the discharge chamber (25) axially separates neighbouring cartridges (2) which are arranged at least approximately mirror symmetrically to a symmetrical plane (38) which runs vertical to the central axis (8), and the discharge chamber (25) is delimited by the opposing out-flow walls (20) of the cartridge (2).

14. A device in accordance with Claim 13,
**characterised in that** the discharge chamber (25) is designed in the form of a plate-shaped, pressure-stable drainage body (41) which carries a cartridge (2) on each of its axial front faces.

15. A device in accordance with one of Claims 1 to 14,
**characterised in that** the cartridge (2) is axially stackable, whereby a spacer is positioned on one front wall (23, 24) of the cartridge (2).

16. A device in accordance with one of Claims 1 to 15,
**characterised in that** the stabilising agent (9) has a granular size of approx. 25 µm to 400 µm to which a fine grain content of up to 8% by mass is preferably added, whereby the granular size of the fine grain content then lies between 1 µm and 25 µm.

## Revendications

1. Dispositif pour recueillir un agent stabilisant granuleux pour la stabilisation de boissons et autres liquides par adsorption d'agents potentiels de formation de trouble,
caractérisé par le fait que le dispositif est conçu sous forme d'une cartouche (2) qui présente une paroi d'entrée de l'écoulement (19), perméable aux liquides, et une paroi de sortie (20), perméable au liquide, qui, avec également une paroi de carter (9, 10, 13, 14) qui les jouxte et limite la cartouche (2), limitent un espace de réception (18, 21) que l'on peut remplir de l'agent stabilisant (7).

2. Dispositif selon la revendication 1,
caractérisé par le fait qu'au moins l'une des parois (19, 20) perméables au liquide est constituée d'un tissu (6) qui, de son côté opposé à l'espace de réception (18, 21), est porté par un élément de soutien formant la paroi du carter (9, 10 ; 13, 14),

3. Dispositif selon la revendication 1,
caractérisé par le fait qu'au moins l'une des parois (19, 20) perméables au liquide est constituée d'un matériau poreux, résistant à la pression.

4. Dispositif selon l'une des revendications 1 à 3,
caractérisé par le fait que la paroi d'entrée de l'écoulement (19) et la paroi de sortie (20) sont disposées à une certaine distance et parallèlement l'une à l'autre et sont reliées par les parois (9, 10 ; 13, 14) de la cartouche.

5. Dispositif selon l'une des revendications 1 à 4,
caractérisé par le fait que la cartouche (2) est conçue en symétrie axiale par rapport à un axe (8).

6. Dispositif selon l'une des revendications 1 à 5,
caractérisé par le fait que l'espace de réception (18, 21) de la cartouche (2) est conçu annulaire avec un espace creux cylindrique intérieur (16) traversant la cartouche (2), une paroi frontale axiale (23, 24) étant conçue sous forme de couvercle amovible (14) et une tige (22), maintenant la cartouche (2), pouvant s'insérer dans l'espace creux (16).

7. Dispositif selon la revendication 6,
caractérisé par le fait que les parois frontales axiales (23, 24) de l'espace annulaire (18) sont formées de la paroi d'entrée de l'écoulement (19) et de la paroi de sortie (20), du liquide qui s'écoule par la paroi de sortie (20) étant évacué par l'espace creux intérieur (16).

8. Dispositif selon la revendication 7,
caractérisé par le fait que la paroi périphérique intérieure et la paroi périphérique extérieure de l'espace annulaire (18) sont formées par des parois cylindriques (9, 10), résistant à la pression, étanches au liquide, du carter de la cartouche (2).

9. Dispositif selon la revendication 7,
caractérisé par le fait que la paroi périphérique intérieure et la paroi périphérique extérieure de l'espace annulaire (18) sont formées d'une feuille (36, 37) étanche au liquide qui, avec également la paroi d'entrée de l'écoulement (19) et la paroi de sortie (20), forme un sac de réception (39).

10. Dispositif selon l'une des revendications 6 à 9,
caractérisé par le fait que le diamètre extérieur de la cartouche (2) vaut environ 50mm à 600mm, le diamètre de l'espace creux intérieur (16), environ 5mm à 500mm , et la hauteur axiale environ 400mm à 1000mm.

11. Dispositif selon l'une des revendications 1 à 10,
caractérisé par le fait que la paroi de sortie (20) limite, de son côté opposé à l'espace de réception (18), un espace de sortie (25) qui s'étend sur la surface de la paroi de sortie (20) et présente une sortie (27) débouchant dans l'espace creux intérieur (16).

12. Dispositif selon l'une des revendications 6 à 9,
caractérisé par le fait que les parois (26, 26') de l'espace de sortie (25) forment, avec la paroi (9, 10) du carter de la cartouche (2), une même surface latérale.

13. Dispositif selon la revendication 11,
caractérisé par le fait que l'espace de sortie (25) sépare axialement des cartouches voisines (2) qui sont disposées, au moins approximativement, symétriquement par rapport à un plan de symétrie (38) orienté perpendiculairement à l'axe (8) et que l'espace de sortie (25) est limité par les parois de sortie (20), situées en face l'une de l'autre, de la cartouche (2).

14. Dispositif selon la revendication 13,
caractérisé par le fait que l'espace de sortie (25) est prévu dans un élément de drainage (41) en forme de disque, résistant à la pression, qui porte une cartouche (2) sur chacune de ses deux faces frontales axiales.

15. Dispositif selon l'une des revendications 1 à 14,
caractérisé par le fait que la cartouche (2) peut s'empiler axialement, un écarteur (17) étant disposé sur une paroi frontale (23, 24) de la cartouche (2).

16. Dispositif selon l'une des revendications 1 à 15,
caractérisé par le fait que l'agent stabilisant (7) présente une granulométrie d'environ 25 µm à 400 µm, à laquelle de préférence est mélangée une proportion à granulométrie fine à hauteur d'une proportion allant jusqu'à environ 8% en masse, la granulométrie de la proportion à granulométrie fine se situant entre environ 1 µm et 25 µm.
